# EUROPÄISCHE PATENTSCHRIFT

(11) **EP 2 271 510 B1**
(45) Veröffentlichungstag und Bekanntmachung des Hinweises auf die Patenterteilung: **28.09.2011**
(21) Anmeldenummer: 09741790.1
(22) Anmeldetag: 28.03.2009
(51) Int. Cl.: B60H 1/00, B60H 3/06

(54) **FAHRZEUGKLIMAANLAGE MIT EINEM FILTERELEMENT MIT FEUCHTESENSOR SOWIE VERFAHREN ZU DEREN BETRIEB**
VEHICLE AIR-CONDITIONING SYSTEM COMPRISING A FILTER ELEMENT WITH A HUMIDITY SENSOR AND METHOD FOR OPERATING A VEHICLE AIR-CONDITIONING SYSTEM
CLIMATISATION DE VÉHICULE COMPORTANT UN FILTRE POURVU D'UN CAPTEUR D'HUMIDITÉ ET PROCÉDÉ D'UTILISATION D'UNE TELLE CLIMATISATION

(30) Priorität: 08.05.2008 DE 102008022630
(43) Veröffentlichungstag der Anmeldung: 12.01.2011
(73) Patentinhaber: Bayerische Motoren Werke Aktiengesellschaft, 80809 München (DE)
(72) Erfinder: HOFHAUS, Joern Dr., 85354 Freising (DE)
(86) Internationale Anmeldenummer: PCT/EP2009/002291
(87) Internationale Veröffentlichungsnummer: WO 2009/135571

(56) Entgegenhaltungen:
- WO-A-2007/004559
- DE-A1- 2 619 600
- DE-A1- 3 624 171
- DE-A1-102005 016 393
- DE-A1-102005 042 406
- US-A1- 2006 192 570
- KNITTEL O ET AL: "FEUCHTESENSOR FUER KLIMAAUTOMATEN" ATZ AUTOMOBILTECHNISCHE ZEITSCHRIFT, VIEWEG PUBLISHING, WIESBADEN, DE, Bd. 102, 1. Januar 2000 (2000-01-01), Seiten 46-48, XP001158935 ISSN: 0001-2785

## Beschreibung

Die vorliegende Erfindung betrifft eine Fahrzeugklimaanlage gemäß dem Oberbegriff des Patentanspruches 1 sowie ein Verfahren gemäß dem Oberbegriff des Patentanspruches 8.

Eine derartige Fahrzeugklimaanlage ist aus der DE 10 2005 042 406 A1 bekannt, bei der ein Feuchtigkeitssensor an einer Aufnahme des Filterelements angeordnet ist. Der Feuchtigkeitssensor misst die Luftfeuchtigkeit des das Filterelement durchströmenden Fluids.

Zum relevanten Stand der Technik zählen ferner die WO 2007/004559 A, DE 26 19 600 A1, KNITTEL O ET AL "FEUCHTESENSOR FÜR KLIMAAUTOMATEN", ATZ AUTOMOBILTECHNISCHE ZEITSCHRIFT, VIEWEG, PUBLISHING, WIESBADEN, DE, Bd. 102, 1. Januar 2000 (2000-01-01), Seiten 46-48, XP001158935 ISSN: 0001-2785 sowie die DE 36 24 171 A1, DE 10 2005 016 393 A1, US 2006/192579 A1, US 68 40 051 B1, DE 40 00 164 A1, WO 2000 032298 A1, EP 18 06 249 A1 und die US 60 52 998 A:

Ferner beschreibt die, nicht vorveröffentlichte deutsche Patentanmeldung DE 10 2007 056 356.8 ein Verfahren zur Steuerung einer Fahrzeugklimaanlage, bei dem in Abhängigkeit eines Sensorsignals ein Maß für die an der Frischiuftansaugöffnung der Fahrzeugklimaanlage angesaugte Wassermenge ermittelt wird. Als Sensorsignal wird z.B. das Signal eines im Spiegelbereich der Windschutzscheibe angeordneten Regensensors verwendet. Es liegt auf der Hand, dass der Regensensor zwar die im Sensorbereich der Windschutzscheibe befindliche Wassermenge misst, nicht aber exakt die im Ansaugbereich der Klimaanlage vorhandene Wassermenge bzw. Feuchtigkeit. In Abhängigkeit der vom Regensensor ermittelten Wassermenge wird die Klimaanlage derart gesteuert, dass die durch die Frischluftansaugöffnung angesaugte Luftmenge reduziert wird.

Die EP 1 246 679 B1 beschreibt ein Luftfilterelement, an dem ein Chip mit integriertem Feuchtesensor angeordnet ist.

Die DE 35 17 481 beschreibt ein Verfahren zur Aufrechterhaltung der Wirksamkeit von Chemisorptionsmassen von Filtern für Kraftfahrzeugkabinen, bei dem ein Filterelement verwendet wird, auf dem ein Feuchtesensor angeordnet ist. In Abhängigkeit des vom Feuchtesensor gelieferten Signals wird eine Heizung eingeschaltet bzw. ausgeschaltet.

Die DE 102 45 911 A1 beschreibt eine eine optische Sensoranordnung, mittels der die Feuchtigkeitsbeladung eines Filterelements gemessen werden kann.

Die DE 101 40 510 B4 beschreibt eine Filteranordnung mit einem am Filter angeordneten Sensor, mittels dem die Luftgeschwindigkeit der durch den Filter strömenden Luft und somit indirekt die Beladung des Filterelements gemessen werden kann.

Bei den meisten Fahrzeugen erfolgt die Frischluftansaugung der Heiz-/Klimaanlage fast ausschließlich über einen Spalt zwischen der Motorhaube und der Windschutzscheibe. Bei starkem Regen oder beim Durchfahren einer Waschstraße können beträchtliche Wassermengen in den Bereich, in dem die Fahrzeugklimaanlage Frischluft ansaugt, eindringen. Mittels geeigneter technischer Maßnahmen ist zu verhindern, dass eindringendes Wasser über die Klimaanlage in den Fahrgastraum gelangt.

Aufgabe der Erfindung ist es, eine Fahrzeugklimaanlage zu schaffen, die möglichst exakt in Abhängigkeit von der in der angesaugten Luft bzw. im Ansaugtrakt der Fahrzeugklimaanlage enthaltenen Feuchtigkeit steuerbar bzw. regelbar ist.

Diese Aufgabe wird durch die Merkmale der Patentansprüche 1 (Vorrichtungsanspruch) bzw. Patentanspruches 8 (Verfahrensanspruch) gelöst. Vorteilhafte Ausgestaltungen und Weiterbildungen der Erfindung sind den Unteransprüchen zu entnehmen.

Ausgangspunkt der Erfindung kann z.B. die bereits eingangs erwähnte, ältere, nicht vorveröffentlichte deutsche Patentanmeldung DE 10 2007 056 356.8 sein, bei der die von der Klimaanlage angesaugte (Frisch-)Luftmenge in Abhängigkeit von einem Sensorsignal geregelt wird, das zumindest einigermaßen gut mit der Feuchtigkeitsbeladung der von der Klimaanlage angesaugten Luft korreliert.

Das Grundprinzip der vorliegenden Erfindung besteht in einer Fahrzeugklimaanlage mit einer Elektronik zur Steuerung bzw. Regelung der Fahrzeugklimaanlage und einem Feuchtesensor, wobei der Feuchtesensor im Unterschied zur DE 10 2007 056 356.8 auf bzw. an einem Luftfilter angeordnet ist, vorzugsweise unmittelbar auf bzw. an einem Luftfilter. Eine Fixierung des Feuchtesensor auf dem Filter ist von Vorteil, da ein zusätzlicher Halter für den Sensor entfällt und dieser günstig in der Mitte des Luftstromes positioniert werden kann. Unmittelbar am Filter herrschen aufgrund der großen Oberfläche relative geringe Strömungsgeschwindigkeiten, so dass unerwünschte Akustikeffekte durch den im Luftstrom positionierten Sensor weitgehend vermieden werden.

Der Luftfilter ist vorzugsweise in einen Luftkanal der Fahrzeugklimaanlage eingesetzt. Durch den Feuchtesensor kann unmittelbar die Feuchtigkeitsbeladung der den Luftfilter durchströmenden Luft bzw. die Feuchtigkeitsbeladung des Luftfilters gemessen werden. Der Sensor dient im Unterschied zu den aus dem Stand der Technik bekannten Sensoren primär zur Detektierung in flüssiger Form angesaugten Wassers.

Vorzugsweise ist der Feuchtesensor stromaufwärts in Bezug auf den Luftfilter angeordnet. "Stromaufwärts" bedeutet auf der "Druckseite" des Luftfilters, d.h. auf derjenigen Seite des Luftfilters, die von einem Gebläse angeströmt wird. Eine Anordnung eines Feuchtesensors "stromabwärts", wie sie z.B. in der DE 10 2005 042 406 A1 erwähnt ist, wird eher als ungünstig angesehen, da der Luftfilter Wasser, das in flüssiger Form im Luftstrom enthalten ist, zumindest teilweise zurückhält. Demgegenüber hat eine stromaufwärtige Anordnung des Feuchtesensors den Vorteil, dass eventuell angesaugte Wassertropfen zunächst durch das Gebläse gesaugt und infolge der dort herrschenden hohen Scherkräfte und Turbulenzen zerstäubt werden, was dazu führt, dass die vom Gebläse kommende Luft nicht nur lokal, sondern auf nahezu gesamten Strömungsbreite des Luftkanals und somit des Luftfilters schlagartig feuchter wird.

Übersteigt die Feuchtigkeitsbeladung einen als kritisch angesehenen Wert, so kann die Elektronik einen oder mehrere Funktionsparameter der Fahrzeugklimaanlage derart steuern bzw. regeln, dass die Feuchtigkeit, die von der Klimaanlage über die ein den Fahrgastraum geförderte Luft in den Fahrgastraum eingebracht wird, begrenzt bzw. reduziert wird. So kann beispielsweise in Abhängigkeit von dem vom Feuchtesensor gelieferten Signal die Menge der angesaugten Frischluft gesteuert bzw. geregelt werden. Wird am Feuchtesensor ein hoher Feuchtewert gemessen, so kann vorgesehen sein, dass der angesaugte Frischluftvolumenstrom reduziert wird.

Mittels dem von dem Feuchtesensor gelieferten Feuchtesignals kann durch die Elektronik der Taupunkt der Ansaugluft bestimmt werden. In Abhängigkeit des ermittelten Taupunkts kann die Fahrzeugklimaanalge von der Elektronik so geregelt bzw. gesteuert werden, dass ein Beschlagen der Scheiben der Fahrgastraums vermieden wird. Auf den bei herkömmlichen Fahrzeugklimaanlagen hierfür vorgesehenen "Beschlagsensor" könnte somit verzichtet werden.

Ein wesentlicher Vorteil der Erfindung ist darin zu sehen, dass mit vergleichsweise einfachen und kostengünstigen "konstruktiven Maßnahmen" ein "Wassereinbruch" in das Luftkanalsystem der Fahrzeugklimaanlage sehr zuverlässig und schnell detektierbar ist. Ein weiterer Vorteil der Erfindung ist darin zu sehen, dass sich mit diesen sehr einfachen konstruktiven Maßnahmen ein geringer Strömungswiderstand erreichen lässt; bei vorgegebener Gebläseleistung wird also ein höherer Luftvolumenstrom und somit ein besserer Wirkungsgrad erreicht.

Vorzugsweise wird der angesaugte Frischluftvolumenstrom gerade dann reduziert, wenn die Feuchtigkeit am Feuchtesensor einen vorgegebenen Grenzwert überschreitet, z.B. wenn extrem große Feuchtigkeits- bzw. Wassermengen sensiert werden, z.B. während eines Platzregens oder beim Durchfahren einer Waschstraße. Der Grenzwert muss nicht notwendigerweise ein fest vorgegebener Wert sein. Vielmehr kann der Grenzwert von der Elektronik aus einer Grenzwertfunktion bzw. aus einem Kennfeld ermittelt werden, die bzw. das wiederum von einer Vielzahl von Parametern wie z.B. Außentemperatur, Fahrzeuggeschwindigkeit etc. abhängen kann.

Bei dem Feuchtesensor kann es sich um einen Sensor handeln, der unmittelbar die Wasserbeladung der den Filter durchströmenden Luft bzw. die Wasserbeladung des Filters misst. Bei dem Sensor kann es sich beispielsweise um einen elektrischen Sensor handeln, dessen elektrischer Widerstand bzw. dessen Leitfähigkeit sich in Abhängigkeit von der (Luft)Feuchtigkeit verändert.

Gemäß der Erfindung handelt es sich um einen kapazitiven Sensor, der darauf basiert, dass sich die Kapazität in Abhängigkeit von der am Sensor vorliegenden Feuchtigkeit verändert. "Kern" eines solchen Sensors kann ein "Kondensator" mit einem Dielektrikum sein, das durch ein Keramikelement, z.B. in der Form eines Plättchens, gebildet sein kann, welches die Kapazität des Kondensators in Abhängigkeit von der Feuchtigkeitsbeladung ändert. Das Keramikelement kann durch eine Heizeinrichtung, z.B. eine elektrische Heizeinrichtung, beheizbar sein. Durch eine derartige Heizeinrichtung kann der Feuchtesensor gezielt getrocknet werden, was den Vorteil hat, dass der Feuchtesensor nach einem Feuchteeintrag relativ schnell wieder in eine einsatzbereiten Zustand gebracht werden kann.

Prinzipielle sind aber auch andere Sensorarten, z.B. optische Sensoren, geeignet.

Nach einer Weiterbildung der Erfindung ist das Filterelement "codiert". "Codiert" bedeutet in diesem Zusammenhang, dass der Typ des verbauten Luftfilters von der Elektronik erkannt werden kann, so dass für die Elektronik z.B. erkennbar ist, ob gerade ein Partikelfilter verbaut ist, ein Kombifilter oder ein Feinstaubfilter oder ein anderer Filtertyp.

Der Filtertyp kann von der Elektronik in vielfältiger Weise "detektiert" werden. Beispielsweise könnte der Leitungswiderstand bzw. der Leitwert des auf bzw. an dem Luftfilter angeordneten Feuchtesensors gemessen und auf diese Weise der Filtertyp detektiert werden. So könnte beispielsweise vorgesehen sein, dass ein Partikelfilter mit einem Feuchtesensor ausgestattet ist, der einen Leitungswiderstand im Bereich von x Ohm (z.B. 100 Ohm) aufweist, ein Kombifilter mit einem Feuchtesensor, der einen Leitungswiderstand im Bereich von y Ohm (z.B. 200 Ohm) und ein Feinstaubfilter mit einem Feuchtesensor, der einen Leitungswiderstand im Bereich von z Ohm (z.B. 300 Ohm) aufweist.

Geht man davon aus, dass der Widerstand des Feuchtesensor infolge von Feuchtigkeitsschwankungen in einer Bandbreite von z.B. 50 Ohm schwanken kann, so kann die Elektronik über die Größenordnung des Widerstands des "Feuchtesensorstromkreises" den Filtertyp erkennen.

Ein "Wassereinbruch" in der Klimaanlage wird sich in einer vergleichsweise starken, kurzfristigen Änderung des vom Feuchtesensor gelieferten Signals bemerkbar machen. Um die normale Schwankung der Luftfeuchtigkeit von einem Wassereinbruch unterscheiden zu können, kann vorgesehen sein, dass zusätzlich zum absoluten Wert des vom Feuchtesensor gelieferten Signals der Signalgradient von der Elektronik überwacht wird, d.h. wie stark der zeitliche Anstieg bzw. der zeitliche Abfall des Signals ist.

Nach einer Weiterbildung der Erfindung weist weist das Luftkanalsystem ein in das Luftkanalsystem integriertes bzw. darin angeordnetes "Gebläse", z.B. ein Lüfterrad auf. Der Luftfilter kann stromaufwärts", d.h. in Strömungsrichtung der Luft vor dem Gebläse oder stromabwärts, d.h. in Strömungsrichtung der Luft nach dem Gebläse angeordnet sein. Ist der Luftfilter stromabwärts angeordnet, so werden in das Luftkanalsystem eindringende Wassertropfen durch das Gebläse in feinste Wassertröpfchen zerstäubt, was den Vorteil hat, dass der Feuchtesensor nahezu verzögerungsfrei das Eindringen von Feuchtigkeit in das Luftkanalsystem registrieren kann. Wäre der Luftfilter vor dem Gebläse angeordnet, so müsste erst ein eindringende Wassertropfen auf den Feuchtesensor auftreffen, was mit einer gewissen "Totzeit" bis zur Registrierung des Wassereinbruchs verbunden sein kann.

Eine besonders einfache und kostengünstige Möglichkeit einen Feuchte-Sensor darzustellen ist es, einen Metalldraht oder einen flachen Metallstreifen z.B. an einem Rahmen des Filterelements anzuordnen. Alternativ dazu könnte auch ein Metalldraht, in den Rahmen des Filterelements oder direkt in das Filtermaterial integriert werden. Bei dem Material, aus dem der Draht bzw. Streifen hergestellt ist, kann es sich z.B. um Kupfer oder um eine Legierung aus unterschiedlichen Metallen handeln. Der den Feuchtesensor bildende elektrische Leiter kann z.B. über elektrische Kontakte oder über einen Stecker mit dem Bordnetz bzw. der Elektronik verbunden sein.

Zusammenfassend werden mit der Erfindung insbesondere folgende Vorteile erreicht:
- Mittels des unmittelbar auf bzw. an dem Luftfilter angeordneten Feuchtesensors kann die in der Ansaugluft enthaltene Feuchtigkeit bzw. in der Ansaugluft enthaltenes Wasser direkt und somit sehr zuverlässig detektiert werden.
- Da der Feuchtesensor unmittelbar auf bzw. an dem Luftfilter angeordnet sein kann, wird keine separate Halterung bzw. Befestigung für den Feuchtesensor benötigt.
- Über den Feuchtesensorstromkreis kann der Filtertyp codiert und somit von der Elektronik erkannt werden. In Abhängigkeit des detektierten Filtertyps kann ein in der Elektronik gespeichertes Betriebskennfetd bzw. eine entsprechende Betriebsstrategie gewählt werden.
- In. Abhängigkeit des detektierten Filtertyps können Serviceintervalle automatisch korrekt gesetzt werden.
- Mittels der Elektronik kann somit auch erkannt werden, ob überhaupt ein Filter verbaut ist bzw. ob eventuell ein Filter verbaut ist, der keinen der Elektronik "bekannten" Feuchtesensor aufweist und somit zu Störungen der Fahrzeugklimaanlage führen kann. Der Verbau eines Filters und der Verbau des für die Fahrzeugklimaanlage vom Hersteller vorgesehenen Filters ist wichtig, da nur ein tatsächlich geeigneter Filter den Verdampfer der Klimaanlage zuverlässig vor einem Eintrag von Schmutz, Fasern, Partikeln oder Kupferabrieb der Kollektoren des Gebläsemotors schützen kann. Nur durch einen "passenden" Filter kann die Bildung bzw. Ansammlung von Bakterien und/oder Pilzen am Verdampfer und somit eine Geruchsbildung wirksam verhindert bzw. zumindest verzögert werden. Darüber hinaus wird der Verdampfer durch einen wirklich "passenden" Filter wesentlich besser vor einem Eintrag von Fremdpartikeln und die damit verbundene Korrosionsgefahr geschützt. Der Verbau eines vom Fahrzeughersteller vorgesehenen Luftfilters bietet aber nicht nur für den Kunden einen Vorteil, sondern auch für den Fahrzeughersteller, da es im Interesse beider Seiten ist, Reparatur- bzw. Garantiekosten möglichst zu vermeiden.

Im Folgenden wird die Erfindung im Zusammenhang mit der Zeichnung näher erläutert. Es zeigen:
- Figur 1: ein erstes Ausführungsbeispiel eines Luftfilters einer Fahrzeugklimaanlage gemäß der Erfindung;
- figuren 2, 3: ein zweites Ausführungsbeispiel,
- Figur 4: das Grundprinzip zur Detektierung des verbauten Filtertyps; und
- Figur 5: eine Skizze zur Verdeutlichung der stromaufwärtigen Anordnung des Feuchtesensors.

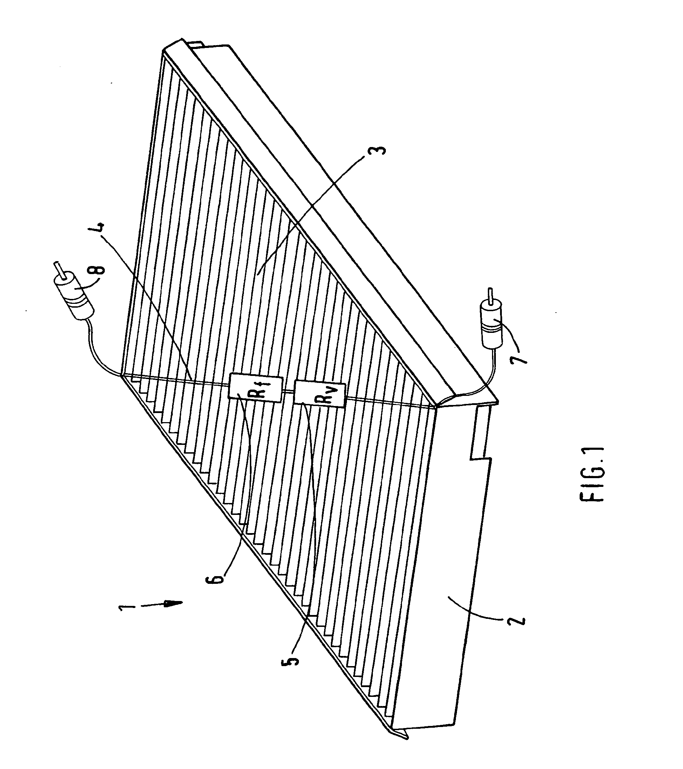

Figur 1 zeigt einen Luftfilter 1, der in einen Luftkanal, insbesondere in einen Frischluftansaugkanal einer hier nicht näher dargestellten Fahrzeugklimaanlage eingesetzt werden kann. Der Luftfilter 1 weist bei dem hier gezeigten Ausführungsbeispiel einen im Wesentlichen rechteckigen Filterrahmen 2 aus Kunststoff und ein in Zick-Zack-Faltung gefaltetes Filtervlies 3 auf.

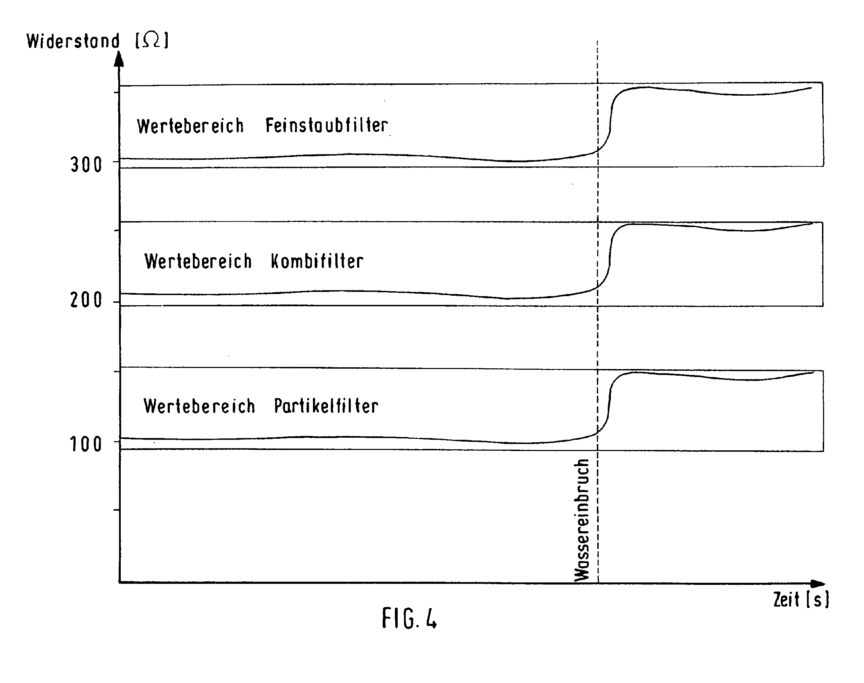

Bei dem hier gezeigten Ausführungsbeispiel erstreckt sich diagonal über den Filterrahmen, d.h. von einer Ecke des Filterrahmens zu einer diagonal gegenüberliegenden Ecke des Filterrahmens 2, ein "Diagnosekabel" 4, in das ein Vorwiderstand 5 und ein feuchtigkeitsabhängiger Widerstand 6 integriert ist. Der Vorwiderstand 5 definiert einen "Widerstandsoffset ", d.h. die Größenordnung, in der der Gesamtwiderstand des Diagnosekabels 4 liegt. Anhand der Größe des Vorwiderstands 5 oder anhand der Größe des maßgeblich durch den Vorwiderstand 5 bestimmten Gesamtwiderstandes des "Diagnosestromkreises" kann die Elektronik also den vorliegenden Filtertyp detektieren, was in Zusammenhang mit Figur 4 noch näher erläutert wird. Der Gesamtwiderstand ergibt sich bei der in Figur 1 gezeigten Serienschaltung der beiden Widerstände 5, 6 aus der Summe der beiden Widerstände. Der Gesamtwiderstand ist somit abhängig von der Feuchtigkeitsbeladung am Widerstand 6.

Bei dem in Figur 1 gezeigten Ausführungsbeispiel ist das Diagnosekabel 4 über zwei zugeordnete Stecker 7, 8, mit einer hier nicht näher dargerstellten Auswerteelektronik verbunden.

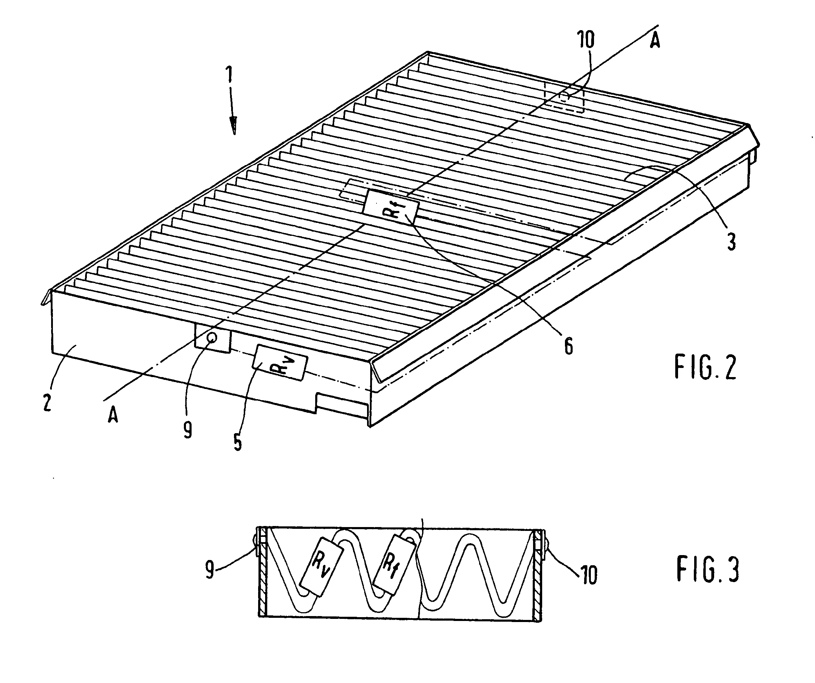

Die Figuren 2, 3 zeigen eine Variante des Ausführungsbeispiels der Figur 1. Anstatt über Stecker ist die durch die beiden Widerstände 5, 6 gebildete Serienschaltung über Kontakte 9, 10, die seitlich am Rahmen 2 des Luftfilters 1 vorgesehen sind, elektrisch mit der Auswerteelektronik verbunden. Das "Diagnosekabel" kann z.B. durch eine Kupferfolie gebildet sein, die am Filterrahmen 2 angeordnet oder in den Filterrahmen 2 und/oder in das Filtervlies 3 integriert ist.

Figur 4 beschreibt, wie über den Widerstand der Feuchtigkeitssensoranordnung verschiedene Filtertypen codiert werden können. Beispielsweise kann vorgesehen sein, dass der elektrische Widerstand bei einem ersten Filtertyp (z.B. Partikelfilter) bei sehr geringer Feuchtigkeitsbeladung im Bereich von 100 Ohm und bei maximaler Feuchtigkeitsbeladung im Bereich von 150 Ohm liegt. Detektiert die Auswerteelektronik einen Gesamtsensorwiderstand im Bereich zwischen 100 und 150 Ohm, so kann daraus geschlossen werden, dass ein Partikelfilter verbaut ist. Dementsprechend können beispielsweise ein Kombifilter und ein Feinstaubfilter durch die Wertebereiche 200 Ohm bis 250 Ohm bzw. 300 Ohm und 350 Ohm codiert werden.

Darüber hinaus kann vorgesehen sein, dass die Auswerteelektronik nicht nur den momentan vorliegenden Gesamtwiderstand der Sensoranordnung misst, sondern auch den Gradienten des Sensorsignals, d.h. die zeitliche Änderung des Widerstands. Bei einem starken Gradienten kann darauf geschlossen werden, dass gerade ein "Wassereinbruch" vorliegt oder endet.

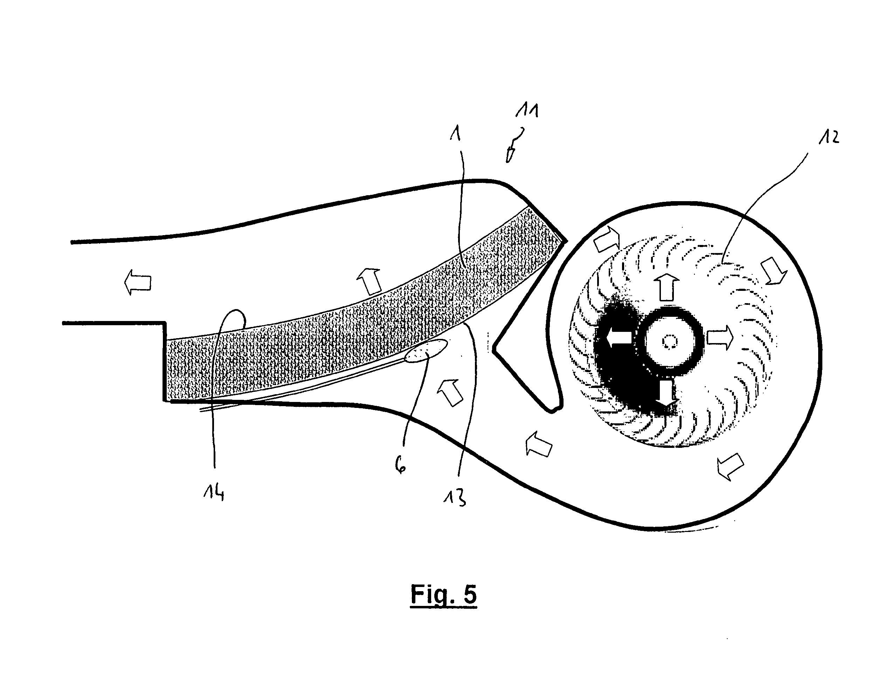

Figur 5 zeigt einen Querschnitt durch einen Strömungskanal 11 einer Fahrzeugklimaanlage. In der Strömungskanalanordnung ist ein Gebläse 12 angeordnet, das Luft, insbesondere Umgebungsluft, ansaugt und in Richtung zu einem ebenfalls in der Strömungskanalanordnung angeordneten Luftfilter 1 bläst-bzw. födert. Der Luftfilter 1 weist eine stromaufwärtige Seite" 13 und eine "stromabwärtige Seite" 14 auf. Der Feuchtesensor 6 ist auf der stromaufwärtigen Seite 13 des Luftfilters 1, d.h. auf der "Druckseite" oder der dem Gebläse 12 zugewandten Seite des Luftfilters 1 angeordnet.

## Patentansprüche

1. Fahrzeugklimaanlage, mit
• einem Luftfilter (1),
• einem Feuchtesensor (6), der auf bzw. an dem Luftfilter (1) angeordnet ist,
• einer Elektronik, die zur Steuerung bzw. Regelung der Fahrzeugklimaanlage vorgesehen ist, wobei der Elektronik ein von dem Feuchtesensor (6) geliefertes Signal zugeführt wird,
**dadurch gekennzeichnet, dass**
der Feuchtesensor (6) ein kapazitiver Sensor ist und
stromaufwärts in Bezug auf den Luftfilter (1) angeordnet ist.

2. Fahrzeugklimaanlage nach Anspruch 1, **dadurch gekennzeichnet, dass** der Feuchtesensor (6) ein durch ein Keramikelement gebildetes Dielektrikum aufweist.

3. Fahrzeugklimaanlage nach Anspruch 1 oder 2, **dadurch gekennzeichnet, dass** eine Heizeinrichtung vorgesehen ist, mittels der der Feuchtesensor beheizt und/oder getrocknet werden kann.

4. Fahrzeugklimaanlage nach einem der Ansprüche 1 bis 3, **dadurch gekennzeichnet, dass** der Feuchtesensor (6) ein Signal liefert, das mit der Feuchtigkeitsbeladung des Luftfilters (1) korelliert.

5. Fahrzeugklimaanlage nach einem der Ansprüche 1 bis 4, **dadurch gekennzeichnet**, das zumindest ein Funktionsparameter der Fahrzeugklimaanlage in Abhängigkeit von dem von dem Feuchtesensor (6) gelieferten Signal gesteuert bzw. geregelt wird.

6. Fahrzeugklimaanlage nach einem der Ansprüche 1 bis 5, **dadurch gekennzeichnet, dass** die Elektronik zumindest in manchen Betriebszuständen der Fahrzeugklimaanlage den Volumenstrom der von der Fahrzeugklimaanlage angesaugten Frischluft in Abhängigkeit von dem von dem Feuchtesensor (6) gelieferten Signal steuert bzw. regelt.

7. Fahrzeugklimaanlage nach einem der Ansprüche 1 bis 6, **dadurch gekennzeichnet, dass** die Elektronik zumindest einen Funktionsparameter der Fahrzeugklimaanlage in Abhängigkeit von der zeitlichen Änderung des vom Feuchtesensor (6) gelieferten Signals, insbesondere in Abhängigkeit des Gradienten des vom Feuchtesensor (6) gelieferten Signals, steuert bzw. regelt.

8. Verfahren zum Betreiben einer Fahrzeugklimaanlage, die einen Luftfilter (1) mit einem auf bzw. an dem Luftfilter angeordneten Feuchtesensor (6) aufweist, der ein Feuchtesignal erzeugt, welches einer Elektronik zugeführt wird, wobei die Elektronik die zeitliche Änderung des Feuchtesignals überwacht und in Abhängigkeit davon mindestens einen Funktionsparameter der Fahrzeugklimaanlage steuert bzw. regelt und die Elektronik in einem Stromkreis, in dem der Feuchtesensor (6) angeordnet ist, eine elektrische Größe misst, mit in der Elektronik gespeicherten Werten bzw. Wertebereichen vergleicht und daraus den vorliegenden Luftfiltertyp ermittelt.

## Claims

1. A vehicle air-conditioning system comprising
• an air filter (1),
• a humidity sensor (6) disposed on or at the air filter (1)
• an electronic unit for opening-loop or closed-loop control of the air-conditioning system, wherein the electronic unit is supplied with a signal delivered by the humidity sensor (6),
**characterised in that**
the humidity sensor (6) is a capacitive sensor and is disposed upstream of the air filter (1).

2. A system according to claim 1, **characterised in that** the humidity sensor (6) is a dielectric in the form of a ceramic element.

3. A system according to claim 1 or claim 2, **characterised in that** a heater is provided for heating and/or drying the humidity sensor.

4. A system according to any of claims 1 to 3, **characterised in that** the humidity sensor (6) delivers a signal correlated with the load of moisture on the air filter (1).

5. A system according to any of claims 1 to 4, **characterised in that** at least one functional parameter of the air-conditioning system is controlled in open or closed loop in dependence on the signal delivered by the humidity sensor (6).

6. A system according to any of claims 1 to 5, **characterised in that** at least in many operating states of the system, the electronic unit, in an open or closed loop, controls the flow rate of fresh air sucked in by the air-conditioning system in dependence on the signal delivered by the humidity sensor (6).

7. A system according to any of claims 1 to 6, **characterised in that** the electronic unit, in an open or closed loop, controls at least one functional parameter of the system in dependence on the variation in time of the signal delivered by the humidity sensor (6), especially in dependence on the gradient of the said signal.

8. A method of operating an air-conditioning system for a vehicle, comprising an air filter and a humidity sensor disposed on or at the air filter and generating a humidity signal supplied to an electronic unit, wherein the electronic unit monitors the variation in time of the humidity signal and, in dependence thereon, controls at least one functional parameter of the air-conditioning system in an open or closed loop, and the electronic unit is disposed in the circuit containing the humidity sensor (6) and measures an electric quantity, compares it with values or ranges of values stored in the electronic unit, and uses it to determine the type of the air filter.

## Revendications

1. Installation de climatisation de véhicule comportant :
- un filtre à air (1),
- un capteur d'humidité (6), installé sur ou dans le filtre à air (1),
- un circuit électronique pour la commande ou la régulation de l'installation de climatisation du véhicule, le circuit hydraulique recevant un signal fourni par le capteur d'humidité (6),
installation **caractérisée en ce que**
le capteur d'humidité (6) est un capteur capacitif installé en amont du filtre à air (1).

2. Installation de climatisation de véhicule selon la revendication 1,
**caractérisée en ce que**
le capteur d'humidité (6) comporte un diélectrique formé par un élément en céramique.

3. Installation de climatisation de véhicule selon la revendication 1 ou 2,
**caractérisée par**
une installation de chauffage pour chauffer le capteur d'humidité et/ou le sécher.

4. Installation de climatisation de véhicule selon l'une des revendications 1 à 3,
**caractérisée en ce que**
le capteur d'humidité (6) fournit un signal en corrélation avec la charge d'humidité du filtre à air (1).

5. Installation de climatisation de véhicule selon l'une des revendications 1 à 4,
**caractérisée par**
au moins un paramètre fonctionnel de l'installation de climatisation du véhicule qui est commandée et/ou régulée en fonction du signal fourni par le capteur d'humidité (6).

6. Installation de climatisation de véhicule selon l'une des revendications 1 à 5,
**caractérisée en ce que**
le circuit électronique commande ou régule au moins dans certains états de fonctionnement de l'installation de climatisation du véhicule, le débit volumique de l'air frais aspiré par l'installation de climatisation du véhicule en fonction du signal fourni par le capteur d'humidité (6).

7. Installation de climatisation de véhicule selon l'une des revendications 1 à 6,
**caractérisée en ce que**
le circuit électronique comporte au moins un paramètre de fonctionnement de l'installation de climatisation en fonction de la variation dans le temps du signal fourni par le capteur d'humidité (6), notamment en relation avec le gradient du signal fourni par le capteur d'humidité (6) pour réguler ou commander.

8. Procédé de gestion d'une installation de climatisation de véhicule comportant un filtre à air (1) avec un capteur d'humidité (6) installé sur ou dans le filtre à air et qui génère un signal d'humidité fourni à un circuit électronique, le circuit électronique surveillant la variation en fonction du temps du signal d'humidité, et en fonction d'au moins un paramètre de fonctionnement de l'installation de climatisation du véhicule, il commande et/ou régule l'électronique dans un circuit électrique équipé du capteur d'humidité (6) pour mesurer une grandeur électrique qui est une valeur enregistrée en mémoire ou verrouillée dans des plages de valeur pour en déduire le type présent de filtre à air.
